# EUROPEAN PATENT APPLICATION

(11) **EP 4 534 812 A1**
(43) Date of publication of application: **09.04.2025**
(21) Application number: 23811449.0
(22) Date of filing: 30.03.2023
(51) Int. Cl.: F01M 13/00, F02B 25/04, F02B 37/00, F02M 21/02

(54) **HYDROGEN ENGINE**

(30) Priority: 24.05.2022 JP 2022084447
(71) Applicant: Yamaha Hatsudoki Kabushiki Kaisha, Iwata-shi, Shizuoka 438-8501 (JP)
(72) Inventor: WACHI Akiyoshi, Iwata-shi, Shizuoka 438-8501 (JP); IWAMOTO Takuya, Iwata-shi, Shizuoka 438-8501 (JP); ARAMAKI Yo, Iwata-shi, Shizuoka 438-8501 (JP)
(74) Representative: Stöckeler, Ferdinand
(86) International application number: PCT/JP2023/013326
(87) International publication number: WO 2023/228570

(57) **Abstract**

A hydrogen engine includes a cylinder, a piston provided reciprocatably inside the cylinder, an intake port provided in the cylinder in order to supply an intake to a combustion chamber, an exhaust port provided in the cylinder for discharging from the combustion chamber, a hydrogen supplying portion provided in the cylinder in order to supply a hydrogen fuel into the cylinder, a crank case connected with the cylinder, a discharge port provided in the crank case for discharging from a crank chamber, a supercharger provided upstream of the intake port in order to supercharge the intake, and a switching portion for switching the intake supercharged by the supercharger between being supplied to the crank chamber and being supplied at least to the combustion chamber. When the hydrogen engine is provided by a hydrogen two-stroke engine, a piston ring functions as the switching portion. When the hydrogen engine is provided by a hydrogen four-stroke engine, an intake valve functions as the switching portion.

## Description

### TECHNICAL FIELD

The present invention relates to hydrogen engines, and more specifically to a hydrogen engine used in transportation equipment and so on.

### BACKGROUND ART

In a hydrogen engine, when a hydrogen fuel is combusted in a combustion chamber, the combustion leaves water vapor (water) produced by the combustion and unburned hydrogen fuel inside the combustion chamber. An amount of water produced in this process is greater than an amount of water produced by combustion in a gasoline engine. Part of the water vapor and the unburned hydrogen fuel inside the combustion chamber moves between the cylinder and the piston as blow-by gas to the crank chamber, and it is desirable to discharge the blow-by gas from the crank chamber in order to decrease engine oil emulsification and component embrittlement inside the crank chamber.

As an example which is pertinent to conventional techniques of discharging blow-by gas from the crank chamber, Patent Literature 1 discloses a four-stroke engine. The four-stroke engine is capable of operating on a fuel which contains hydrogen gas, and includes a crank case formed with a ventilation port, a ventilation flow path providing communication between the ventilation port and the outside of the crank case, and a ventilation fan provided in the ventilation flow path for forced discharge of a hydrogen-containing gas from inside the crank case to the outside.

### CITATION LIST

### PATENT LITERATURE

Patent Literature 1: JP-A 2021-127704

### SUMMARY OF INVENTION

### TECHNICAL PROBLEM

The engine disclosed in Patent Literature 1 requires the ventilation fan to be provided externally in order to forcibly discharge the hydrogen-containing gas from inside the crank case to the outside, i.e., the engine requires a complicated structure.

Therefore, a primary object of the present invention is to provide a hydrogen engine capable of discharging the blow-by-gas from the crank chamber with a simple structure.

### SOLUTION TO PROBLEM

According to an aspect of the present invention, there is provided a hydrogen engine including a cylinder; a piston provided reciprocatably inside the cylinder; an intake port provided in the cylinder in order to supply an intake to a combustion chamber defined by the cylinder and the piston; an exhaust port provided in the cylinder for discharging from the combustion chamber; a hydrogen supplying portion provided in the cylinder in order to supply a hydrogen fuel into the cylinder; a crank case connected with the cylinder; a discharge port provided in the crank case for discharging from a crank chamber inside the crank case; a supercharger provided upstream of the intake port in order to supercharge the intake to the combustion chamber or the crank chamber; and a switching portion for switching the intake supercharged by the supercharger between being supplied to the crank chamber and being supplied at least to the combustion chamber.

According to the present invention, the intake supercharged by the supercharger is supplied to either the combustion chamber or the crank chamber by the switching portion. In the combustion chamber, a mixed gas is formed, which contains oxygen from the supercharged intake and hydrogen fuel supplied by the hydrogen supplying portion, for use to drive the hydrogen engine. On the other hand, by supplying the supercharged intake to the crank chamber, there is active discharge of the blow-by gas (containing water vapor and unburned hydrogen fuel) in the crank chamber, through the discharge port. As described, the intake supercharged by the supercharger is supplied not only to the combustion chamber but also to the crank chamber, whereby it becomes possible to discharge the blow-by gas from the crank chamber with a simple configuration without employing a ventilation fan and so on, i.e., it is possible to decrease engine oil emulsification and component embrittlement inside the crank chamber.

Preferably, the hydrogen engine is provided by a hydrogen two-stroke engine. The piston includes a piston ring slidable with respect to an inner circumferential surface of the cylinder, the intake port is provided in a side surface of the cylinder, in a range where the piston ring is movable, and the piston ring functions as the switching portion for the intake supercharged by the supercharger to be switched between being supplied to the crank chamber via the intake port and being supplied to the combustion chamber via the intake port. In this case, in the hydrogen two-stroke engine, it is possible, with a simple sliding action of the piston ring, which functions as the switching portion, on the inner circumferential surface of the cylinder, to easily switch the intake supercharged by the supercharger between being supplied to the combustion chamber via the intake port and being supplied to the crank chamber via the intake port. Specifically, when the piston ring is at a lower position than the intake port which is provided on the side surface of the cylinder, the intake supercharged by the supercharger is supplied to the combustion chamber. On the other hand, when the piston ring is at a higher position than the intake port which is provided on the side surface of the cylinder, the intake supercharged by the supercharger is supplied to the crank chamber.

Further, preferably, the exhaust port is at a position higher than a top dead center of the piston, and the hydrogen engine further includes an exhaust valve provided in the cylinder in order to open and close the exhaust port. In this case, it is possible, by operating the exhaust valve thereby opening and closing the exhaust port, to discharge the exhaust from the combustion chamber via the exhaust port at a desired timing, regardless of the position of the piston.

Further, preferably, the hydrogen engine is provided by a hydrogen four-stroke engine, and further includes an intake path communicating between the intake port and the supercharger; a bypass communicating between the intake path and the crank chamber; and a switching valve functioning as the switching portion for the intake supercharged from the supercharger to be switched between being supplied to the crank chamber via the bypass and being supplied at least to the combustion chamber via the intake port. In this case, in the hydrogen four-stroke engine, it is possible, with the switching valve which functions as the switching portion, to easily switch the intake supercharged by the supercharger between being supplied at least to the combustion chamber via the intake port (at least to the combustion chamber, of the combustion chamber and the crank chamber) and being supplied to the crank chamber via the bypass.

Preferably, the switching valve includes an intake valve provided in the cylinder in order to open and close the intake port. In this case, by using the intake valve, which is normally provided in a hydrogen four-stroke engine, as a switching valve, it is possible to provide a switching valve without having to prepare a separate one. Typically, while the piston descends from the top dead center toward the bottom dead center, the intake valve opens the intake port, to introduce the intake supercharged by the supercharger into the combustion chamber via the intake port and into the crank chamber via the bypass. During the other time, on the other hand, the intake valve closes the intake port, so the intake supercharged by the supercharger is not supplied to the combustion chamber but supplied to the crank chamber via the bypass.

Further, preferably, the hydrogen engine further includes a spark plug provided in the cylinder, at a position higher than the top dead center in order to ignite the combustion chamber. In this case, it is possible to ignite the mixed gas inside the combustion chamber at a desired timing, regardless of the position of the piston.

Further, preferably, the spark plug is at a top portion in the combustion chamber. In this case, it is possible to reliably ignite the mixed gas inside the combustion chamber at a desired timing.

Preferably, the hydrogen supplying portion includes a hydrogen injector provided at a position higher than a top dead center of the piston in order to inject the hydrogen fuel directly into the combustion chamber. In this case, it is possible to inject the hydrogen fuel directly into the combustion chamber at a desired timing, regardless of the position of the piston.

The hydrogen engine according to the present invention does not emit carbon dioxide in its exhaust, so it can contribute carbon neutrality of transportation equipment and be utilized suitably in transportation equipment.

The hydrogen engine according to the present invention does not emit carbon dioxide in its exhaust, can have improved power and torque even if the engine has a small displacement, and therefore can contribute carbon neutrality and improved output and torque in small mobility equipment, being suitable for use in small mobility equipment.

### ADVANTAGEOUS EFFECTS OF INVENTION

According to the present invention, there is provided a hydrogen engine capable of discharging exhaust from the crank chamber with a simple structure.

### BRIEF DESCRIPTION OF DRAWINGS

Fig. 1 is a schematic diagram which shows a hydrogen engine according to an embodiment of the present invention.
Fig. 2 is an illustrative drawing for describing an operation of the hydrogen engine in Fig. 1.
Fig. 3 is a schematic diagram which shows small mobility equipment equipped with the hydrogen engine in Fig. 1.
Fig. 4 is a schematic diagram which shows a hydrogen engine according to another embodiment of the present invention.
Fig. 5 is an illustrative drawing for describing an operation of the hydrogen engine in Fig. 4.
Fig. 6 is an illustrative drawing which shows actions following those shown in Fig. 5.

### DESCRIPTION OF EMBODIMENTS

Hereinafter, embodiments of the present invention will be described with reference to the drawings.

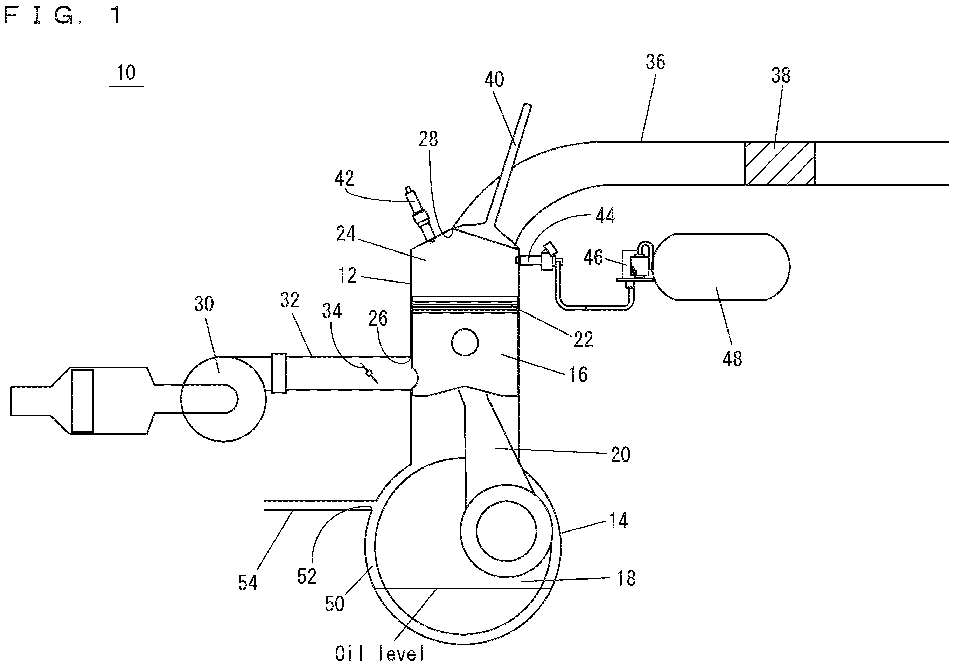

Referring to Fig. 1, a hydrogen engine 10 according to an embodiment of the present invention is a uniflow hydrogen two-stroke engine, and includes a cylinder 12. The cylinder 12 has a crank case 14 connected therewith. Inside the cylinder 12, a piston 16 is provided reciprocatably. The crank case 14 accommodates a crank shaft 18. The piston 16 and the crank shaft 18 are connected with each other by a connecting rod 20. The piston 16 includes a piston ring 22 which is slidable with respect to an inner circumferential surface of the cylinder 12. The piston ring 22 is provided near an upper end portion of the piston 16. The upper end portion of the piston 16 refers to an end portion of the piston 16 closer to a combustion chamber 24. The piston ring 22 functions as a switching portion for switching an intake supercharged by a supercharger 30 (which will be described later) between going through an intake port 26 (which will be described later) to be supplied to a crank chamber 50 (which will be described later) and going through the intake port 26 to be supplied to the combustion chamber 24.

In order to supply an intake to the combustion chamber 24 which is defined by the cylinder 12 and the piston 16, an intake port 26 is provided on a side surface of the cylinder 12. An exhaust port 28 is provided in the cylinder 12, at a position higher than the intake port 26 for discharging from the combustion chamber 24.

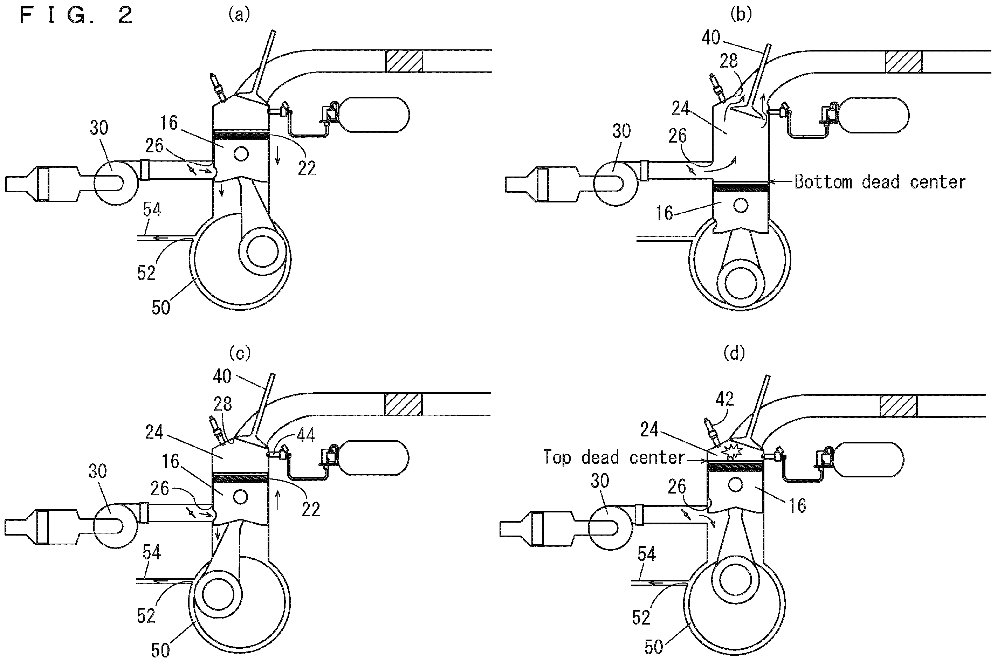

The intake port 26 is located at a position higher than a bottom dead center of the piston 16 but lower than a top dead center thereof (see Fig. 2(b) and Fig. 2(d)). In other words, the intake port 26 is provided between the top dead center and the bottom dead center of the piston 16, i.e., in a range where an upper end portion of the piston 16 is movable. Also, the intake port 26 is provided in a range where the piston ring 22 is movable. Therefore, when the piston 16 is at the bottom dead center, the intake port 26 is at a higher position than the upper end portion of the piston 16, while it is at a lower position than the upper end portion of the piston 16 when the piston 16 is at the top dead center. Also, the exhaust port 28 is at a higher position than the top dead center of the piston 16.

In order to supercharge an intake from the intake port 26 to the combustion chamber 24 or to the crank chamber 50, a supercharger 30 is provided upstream of the intake port 26. The intake port 26 and the supercharger 30 communicate with each other via an air intake pipe 32 which serves as an intake path. The supercharger 30 may be provided by a turbocharger or a supercharger. Inside the air intake pipe 32, a throttle valve 34 is provided for adjusting an amount of supply of the intake. In the present embodiment, the intake is always supercharged by the supercharger 30.

In order to discharge exhaust from the combustion chamber 24, an exhaust pipe 36 is attached to the exhaust port 28. In order to purify the exhaust, a front catalyst 38 is provided inside the exhaust pipe 36. In order to open and close the exhaust port 28, an exhaust valve 40 is provided in the cylinder 12. In the present embodiment, the exhaust valve 40 is provided by a poppet valve.

In order to ignite the combustion chamber 24, a spark plug 42 is provided in the cylinder 12, at a position higher than the top dead center of the piston 16. The spark plug 42 is at a top portion in the combustion chamber 24.

In order to directly inject a hydrogen fuel into the combustion chamber 24, the cylinder 12 is provided with a hydrogen injector 44. The hydrogen injector 44 functions as a hydrogen supplying portion for supplying the hydrogen fuel into the cylinder 12. The hydrogen injector 44 is at a higher position than the top dead center of the piston 16. The hydrogen injector 44 is connected with a hydrogen tank 48 via a regulator 46. The hydrogen injector 44 directly injects the hydrogen fuel supplied from the hydrogen tank 48, at an injection pressure adjusted by the regulator 46, into the combustion chamber 24.

In order to discharge a gas from the crank chamber 50 inside the crank case 14, the crank case 14 is provided with a discharge port 52, and the discharge port 52 has a discharge pipe 54 attached thereto. From the discharge pipe 54, a blow-by gas, for example, which is present inside the crank chamber 50 is discharged to the outside.

The hydrogen engine 10 described thus far operates as follows for example.

First, as shown in Fig. 2(a), the piston 16 descends, and as the piston 16 comes to the bottom dead center as shown in Fig. 2(b), the exhaust valve 40 opens the exhaust port 28. Then, as indicated by arrows in Fig. 2(b), the supercharger 30 supercharges the intake from the intake port 26 into the combustion chamber 24 and the combustion chamber 24 is scavenged. In other words, exhaust which contains water vapor is discharged in a uniflow from the combustion chamber 24. This replaces the gas inside the combustion chamber 24, i.e., an intake (air) which contains oxygen is introduced into the combustion chamber 24.

Thereafter, as the piston 16 ascends, the exhaust valve 40 begins to close the exhaust port 28. As shown in Fig. 2(c), when the piston ring 22 comes to a position higher than the intake port 26 where the combustion chamber 24 is no longer supplied with the intake, the exhaust port 28 is completely closed by the exhaust valve 40, whereby the combustion chamber 24 becomes a closed space. Upon this time, the piston ring 22 switches the destination of the supercharged intake, i.e., the intake supercharged by the supercharger 30 is supplied to the crank chamber 50. This causes a blow-by gas inside the crank chamber 50 to be discharged from the discharge port 52 via the discharge pipe 54 to the outside.

Under the circumstances described above, the piston 16 continues to ascend toward the top dead center, bringing the combustion chamber 24 under an increasing compression. Then, as the hydrogen injector 44 makes direct injection of the hydrogen fuel into the combustion chamber 24 at a predetermined timing, a mixed, compressed gas of hydrogen and oxygen is formed inside the combustion chamber 24. Further, as shown in Fig. 2(d), at an approximate time point when the piston 16 reaches the top dead center, the spark plug 42 causes ignition in the combustion chamber 24, leading to a combustion (explosion) inside the combustion chamber 24.

Then, the piston 16 is pushed downward (toward the bottom dead center), bringing the hydrogen engine 10 to the state shown in Fig. 2(a). The supply of the intake to the crank chamber 50 continues until the piston ring 22 descends and has passed the intake port 26. Thereafter, intake supply is switched to the combustion chamber 24.

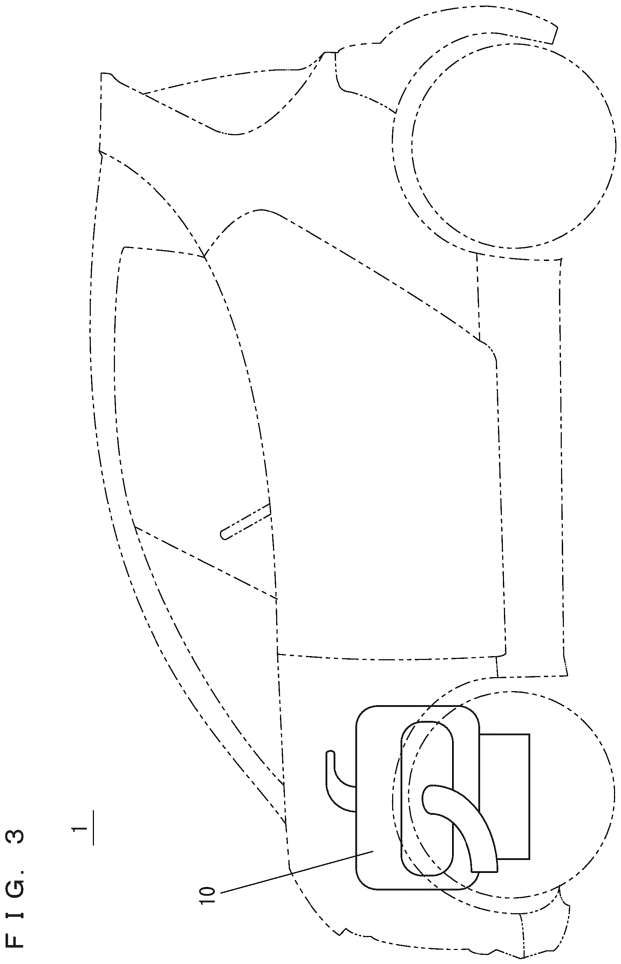

Thereafter, the above-described cycle of actions is repeated. As described, in the hydrogen engine 10, a cycle of intake, compression, combustion and exhaust is completed while the piston 16 makes one complete reciprocating travel. The hydrogen engine 10 is suitably utilized in small mobility equipment 1 as shown in Fig. 3.

According to the hydrogen engine 10 described thus far, the intake supercharged by the supercharger 30 is supplied to either the combustion chamber 24 or the crank chamber 50 by the switching portion. In the combustion chamber 24, a mixed gas is formed, which contains oxygen from the supercharged intake and hydrogen fuel supplied by the hydrogen injector 44, for use to drive the hydrogen engine 10. On the other hand, by supplying the supercharged intake to the crank chamber 50, there is active discharge of the blow-by gas (containing water vapor and unburned hydrogen fuel) in the crank chamber 50, through the discharge port 52. As described, the intake supercharged by the supercharger 30 is supplied not only to the combustion chamber 24 but also to the crank chamber 50, whereby it becomes possible to discharge the blow-by gas from the crank chamber 50 with a simple configuration without employing a ventilation fan and so on, i.e., it is possible to decrease engine oil emulsification and component embrittlement inside the crank chamber 50.

The spark plug 42 is provided at a position higher than the top dead center in the cylinder 12. Therefore, it is possible to ignite the mixed gas inside the combustion chamber 24 at a desired timing, regardless of the position of the piston 16.

The spark plug 42 is at a top portion in the combustion chamber 24. Therefore, it is possible to reliably ignite the mixed gas inside the combustion chamber 24 at a desired timing.

The hydrogen injector 44 is provided at a position higher than the top dead center of the piston 16. Therefore, it is possible to inject the hydrogen fuel directly into the combustion chamber 24 at a desired timing, regardless of the position of the piston 16.

The hydrogen engine 10 does not emit carbon dioxide in its exhaust, can have improved power and torque even if the engine has a small displacement, and therefore can contribute carbon neutrality and improved output and torque in the small mobility equipment 1, being suitable for use in the small mobility equipment 1.

The above-described functions and advantages are also offered by a hydrogen engine 100 which will be described later.

Also, according to the hydrogen engine 10, it is possible, with a simple sliding action of the piston ring 22 which functions as the switching portion, on the inner circumferential surface of the cylinder 12, to easily switch the intake supercharged by the supercharger 30 between being supplied to the combustion chamber 24 via the intake port 26 and being supplied to the crank chamber 50 via the intake port 26. Specifically, when the piston ring 22 is at a lower position than the intake port 26 which is provided on the side surface of the cylinder 12, the intake supercharged by the supercharger 30 is supplied to the combustion chamber 24. On the other hand, when the piston ring 22 is at a higher position than the intake port 26 which is provided on the side surface of the cylinder 12, the intake supercharged by the supercharger 30 is supplied to the crank chamber 50.

The exhaust port 28 is at a position higher than the top dead center of the piston 16. Therefore, it is possible, by operating the exhaust valve 40 thereby opening and closing the exhaust port 28, to discharge the exhaust from the combustion chamber 24 via the exhaust port 28 at a desired timing, regardless of the position of the piston 16.

Next, description will be made for a hydrogen engine 100, which is another embodiment of the present invention.

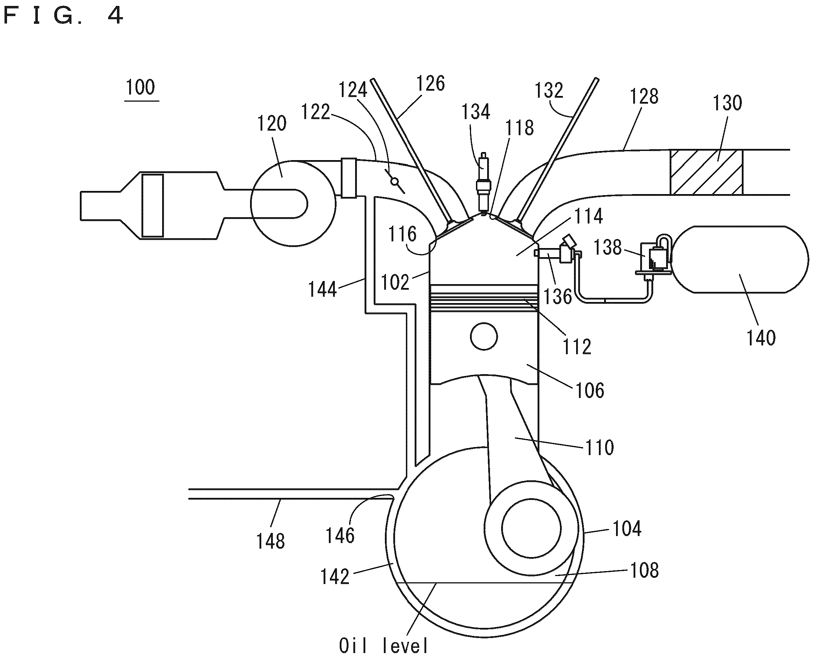

Referring to Fig. 4, the hydrogen engine 100 is a hydrogen four-stroke engine, and includes a cylinder 102. The cylinder 102 has a crank case 104 connected therewith. Inside the cylinder 102, a piston 106 is provided reciprocatably. The crank case 104 accommodates a crank shaft 108. The piston 106 and the crank shaft 108 are connected with each other by a connecting rod 110. The piston 106 includes a piston ring 112 which is slidable with respect to an inner circumferential surface of the cylinder 102. The piston ring 112 is provided near an upper end portion of the piston 106. The upper end portion of the piston 106 refers to an end portion of the piston 106 closer to a combustion chamber 114.

In order to supply an intake to the combustion chamber 114 which is defined by the cylinder 102 and the piston 106, an intake port 116 is provided at a top portion of the cylinder 102. An exhaust port 118 is provided at a top portion of the cylinder 102 for discharging from the combustion chamber 114.

In order to supercharge an intake from the intake port 116 to the combustion chamber 114 or to a crank chamber 142, a supercharger 120 is provided upstream of the intake port 116. The intake port 116 and the supercharger 120 communicate with each other via an air intake pipe 122 which serves as an intake path. The supercharger 120 may be provided by a turbocharger or a supercharger. Inside the air intake pipe 122, a throttle valve 124 is provided for adjusting an amount of supply of the intake. In the present embodiment, the intake is always supercharged by the supercharger 120. In order to open and close the intake port 116, an intake valve 126 is provided in the cylinder 102. In the present embodiment, the intake valve 126 is provided by a poppet valve. The intake valve 126 functions as a switching portion (switching valve) for switching the intake supercharged from the supercharger 120 between being supplied to the crank chamber 142 (which will be described later) via a bypass 144 (which will be described later) and being supplied to the crank chamber 142 via the bypass 144 and also to the combustion chamber 114 via the intake port 116.

In order to discharge exhaust from the combustion chamber 114, an exhaust pipe 128 is attached to the exhaust port 118. In order to purify the exhaust, a front catalyst 130 is provided inside the exhaust pipe 128. In order to open and close the exhaust port 118, an exhaust valve 132 is provided in the cylinder 102. In the present embodiment, the exhaust valve 132 is provided by a poppet valve.

In order to ignite the combustion chamber 114, a spark plug 134 is provided in the cylinder 102, at a position higher than the top dead center of the piston 106. The spark plug 134 is at a top portion in the combustion chamber 114.

In order to directly inject a hydrogen fuel into the combustion chamber 114, the cylinder 102 is provided with a hydrogen injector 136. The hydrogen injector 136 functions as a hydrogen supplying portion for supplying the hydrogen fuel into the cylinder 102. The hydrogen injector 136 is at a higher position than the top dead center of the piston 106. The hydrogen injector 136 is connected with a hydrogen tank 140 via a regulator 138. The hydrogen injector 136 directly injects the hydrogen fuel supplied from the hydrogen tank 140, at an injection pressure adjusted by the regulator 138, into the combustion chamber 114.

The air intake pipe 122 and the crank chamber 142 inside the crank case 104 communicate with each other via a bypass 144. In order to discharge a gas from the crank chamber 142 inside the crank case 104, the crank case 104 is provided with a discharge port 146, and the discharge port 146 has a discharge pipe 148 attached thereto. From the discharge pipe 148, a blow-by gas, for example, which is present inside the crank chamber 142 is discharged to the outside.

The hydrogen engine 100 described thus far operates as follows for example.

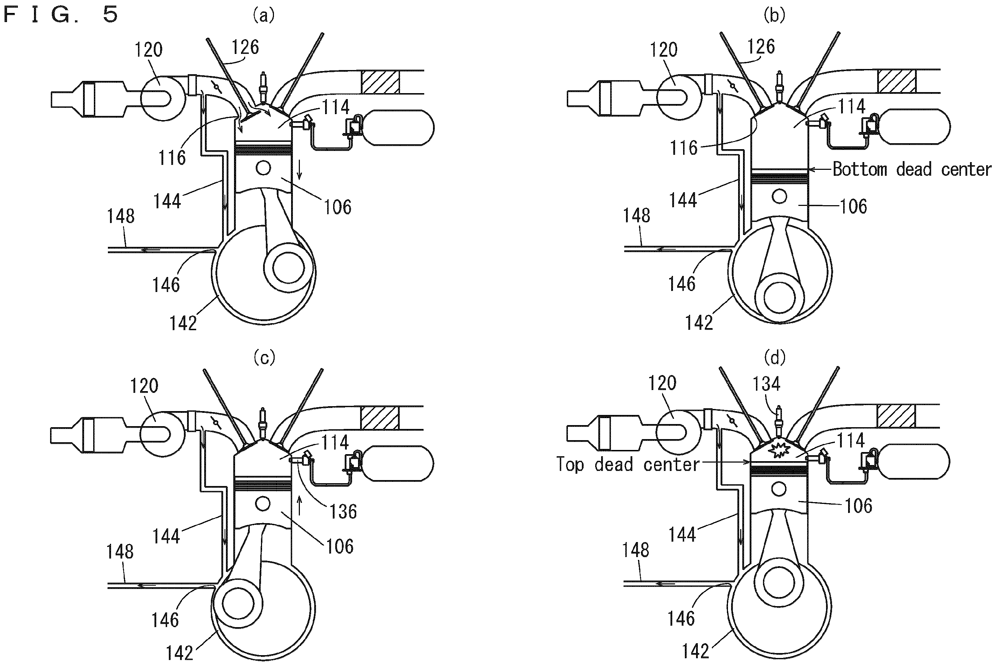

First, as shown in Fig. 5(a), while the piston 106 moves from its top dead center toward its bottom dead center, the intake valve 126 opens the intake port 116, and as indicated by Arrows, the supercharger 120 supplies an intake into the combustion chamber 114 from the intake port 116. As shown in Fig. 5(b), at a point where the piston 106 is at the bottom dead center, the intake port 116 is completely closed by the intake valve 126, whereby the combustion chamber 114 becomes a closed space, and the combustion chamber 114 is loaded with an intake (air) containing oxygen. As described, by closing the intake valve 126, the intake supercharged by the supercharger 120 is no longer supplied to the combustion chamber 114, but supplied only to the crank chamber 142 via the bypass 144.

Under the circumstances described above, as shown in Fig. 5(c), the piston 106 begins to ascend toward the top dead center, bringing the combustion chamber 114 under an increasing compression. Then, as the hydrogen injector 136 makes direct injection of the hydrogen fuel into the combustion chamber 114 at a predetermined timing, a mixed, compressed gas of hydrogen and oxygen is formed inside the combustion chamber 114. Further, as shown in Fig. 5(d), at an approximate time point when the piston 106 reaches the top dead center, the spark plug 134 causes ignition in the combustion chamber 114, leading to a combustion (explosion) inside the combustion chamber 114.

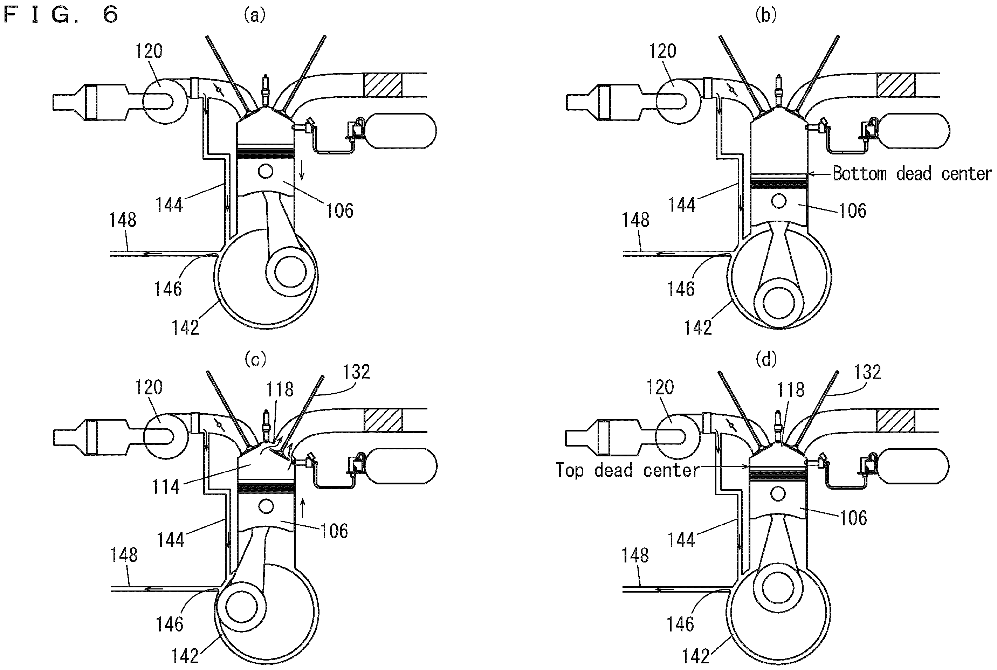

Then, the piston 106 is pushed downward (toward the bottom dead center), assumes the state shown in Fig. 6(a) and then comes to the bottom dead center as shown in Fig. 6(b).

Thereafter, as shown in Fig. 6(c), while the piston 106 moves from the bottom dead center toward the top dead center, the exhaust valve 132 opens the exhaust port 118, and as indicated by Arrows, exhaust containing water vapor is discharged from the combustion chamber 114.

As shown in Fig. 6(d), at a point where the piston 106 is at the top dead center, the exhaust port 118 is completely closed by the exhaust valve 132, and thereafter the cycle returns to the state shown in Fig. 5(a).

In the present embodiment, the intake supercharged by the supercharger 120 is always supplied to the crank chamber 142 via the bypass 144. This causes constant discharge of a blow-by gas inside the crank chamber 142 from the discharge port 146 via the discharge pipe 148 to the outside.

Thereafter, the above-described cycle of actions is repeated. As described, in the hydrogen engine 100, a cycle of intake, compression, combustion and exhaust is completed while the piston 106 makes two complete reciprocating travels. The hydrogen engine 100 is also suitably utilized in the small mobility equipment 1 as shown in Fig. 3.

According to the hydrogen engine 100 described thus far, by using the intake valve 126, which is normally provided in a hydrogen four-stroke engine, as a switching valve, it is possible to provide a switching valve without having to prepare a separate one. Typically, while the piston 106 descends from the top dead center toward the bottom dead center, the intake valve 126 opens the intake port 116, to introduce the intake supercharged by the supercharger 120 into the combustion chamber 114 via the intake port 116 and into the crank chamber 142 via the bypass 144. During the other time, on the other hand, the intake valve 126 closes the intake port 116, so the intake supercharged by the supercharger 120 is not supplied to the combustion chamber 114 but supplied to the crank chamber 142 via the bypass 144.

It should be noted here that in the hydrogen engine 100, there may be provided a switching valve functioning as the switching portion, at a branching place of the air intake pipe 122 and the bypass 144. By using this switching valve, it is possible to easily switch the intake supercharged from the supercharger 120 between being supplied to the crank chamber 142 via the bypass 144 and being supplied to the combustion chamber 114 via the intake port 116.

The hydrogen engines 10 and 100 according to the present invention may be utilized not only in the small mobility equipment 1 but also in any transportation equipment. Since the hydrogen engines 10 and 100 do not emit carbon dioxide in their exhaust, they can contribute carbon neutrality of transportation equipment and be utilized suitably in transportation equipment.

The present invention being thus far described in terms of preferred embodiments, it is obvious that these may be varied in many ways within the scope and the spirit of the present invention. The scope of the present invention is only limited by the accompanied claims.

### REFERENCE SIGNS LIST

- 1: Small mobility equipment
- 10, 100: Hydrogen engine
- 12, 102: Cylinder
- 14, 104: Crank case
- 16, 106: Piston
- 18, 108: Crank shaft
- 20, 110: Connecting rod
- 22, 112: Piston ring
- 24, 114: Combustion chamber
- 26, 116: Intake port
- 28, 118: Exhaust port
- 30, 120: Supercharger
- 32, 122: Air intake pipe
- 36, 128: Exhaust pipe
- 40, 132: Exhaust valve
- 42, 134: Spark plug
- 44, 136: Hydrogen injector
- 50, 142: Crank chamber
- 52, 146: Discharge port
- 54, 148: Discharge pipe
- 126: Intake valve
- 144: Bypass

## Claims

1. A hydrogen engine comprising: a cylinder;
a piston provided reciprocatably inside the cylinder;
an intake port provided in the cylinder in order to supply an intake to a combustion chamber defined by the cylinder and the piston;
an exhaust port provided in the cylinder for discharging from the combustion chamber;
a hydrogen supplying portion provided in the cylinder in order to supply a hydrogen fuel into the cylinder;
a crank case connected with the cylinder;
a discharge port provided in the crank case for discharging from a crank chamber inside the crank case;
a supercharger provided upstream of the intake port in order to supercharge the intake to the combustion chamber or the crank chamber; and
a switching portion for switching the intake supercharged by the supercharger between being supplied to the crank chamber and being supplied at least to the combustion chamber.

2. The hydrogen engine according to Claim 1, provided by a hydrogen two-stroke engine, wherein
the piston includes a piston ring slidable with respect to an inner circumferential surface of the cylinder,
the intake port is provided in a side surface of the cylinder, in a range where the piston ring is movable, and
the piston ring functions as the switching portion for the intake supercharged by the supercharger to be switched between being supplied to the crank chamber via the intake port and being supplied to the combustion chamber via the intake port.

3. The hydrogen engine according to Claim 1 or 2, wherein the exhaust port is at a position higher than a top dead center of the piston, and
the hydrogen engine further comprises an exhaust valve provided in the cylinder in order to open and close the exhaust port.

4. The hydrogen engine according to Claim 1, provided by a hydrogen four-stroke engine, further comprising:
an intake path communicating between the intake port and the supercharger;
a bypass communicating between the intake path and the crank chamber; and
a switching valve functioning as the switching portion for the intake supercharged from the supercharger to be switched between being supplied to the crank chamber via the bypass and being supplied at least to the combustion chamber via the intake port.

5. The hydrogen engine according to Claim 4, wherein the switching valve includes an intake valve provided in the cylinder in order to open and close the intake port.

6. The hydrogen engine according to one of Claims 1 to 5, further comprising a spark plug provided in the cylinder, at a position higher than the top dead center in order to ignite the combustion chamber.

7. The hydrogen engine according to Claim 6, wherein the spark plug is at a top portion in the combustion chamber.

8. The hydrogen engine according to one of Claims 1 to 7, wherein the hydrogen supplying portion includes a hydrogen injector provided at a position higher than a top dead center of the piston in order to inject the hydrogen fuel directly into the combustion chamber.

9. The hydrogen engine according to one of Claims 1 to 8, for use in transportation equipment.

10. The hydrogen engine according to Claim 9, wherein the transportation equipment includes small mobility equipment.
